(19) Europäisches Patentamt / European Patent Office / Office européen des brevets

(11) **EP 4 332 817 A1**

(12) **EUROPEAN PATENT APPLICATION**

(43) Date of publication:
**06.03.2024 Bulletin 2024/10**

(21) Application number: **22306301.7**

(22) Date of filing: **01.09.2022**

(51) International Patent Classification (IPC):
**G06F 30/13** $^{(2020.01)}$    **G06F 30/27** $^{(2020.01)}$
**G06F 30/17** $^{(2020.01)}$    G06F 111/20 $^{(2020.01)}$

(52) Cooperative Patent Classification (CPC):
**G06F 30/13; G06F 30/17; G06F 30/27;**
G06F 2111/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes
78140 Vélizy-Villacoublay (FR)**

(72) Inventors:
• **Boucher, Julien
Vélizy-Villacoublay (FR)**
• **Mezghanni, Mariem
Vélizy-Villacoublay (FR)**
• **Ndoko, Arthur
Vélizy-Villacoublay (FR)**

(74) Representative: **Bandpay & Greuter
11 rue Christophe Colomb
75008 Paris (FR)**

(54) **GENERATING 3D MODEL REPRESENTING FACTORY**

(57)    The disclosure relates to a computer-implemented method for generating a 3D model representing a factory. The method comprises obtaining a point cloud from a scan of the factory. The method comprises fitting the point cloud with linear CAD extrusions.

EP 4 332 817 A1

**Description**

**TECHNICAL FIELD**

The disclosure relates to the field of computer programs and systems, and more specifically to a method, system and program for generating a 3D model representing a factory.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

The use of 3D models in the industry is becoming more and more important. Such 3D models can represent the inside of a factory, and can be used to assess the operation of the factory, for example safety on the production lines of the factory. A preliminary step generally consists in generating such a 3D model representing the factory. One solution for generating a 3D model consists in using a point cloud from a scan of the factory and generating the 3D model from this point cloud (e.g., after a segmentation of the point cloud).

Existing solutions for generating a 3D model from a point cloud are not adequate. Indeed, existing solutions generally generate a 3D model comprising primitives (e.g., cuboids) that are not adapted for CAD software. The generated 3D model can therefore not be directly imported into a CAD software. Moreover, these primitives are generally too basic and not expressive enough, thus leading to an inaccurate representation of the factory by the 3D model. Examples of such inexpressive primitives used in existing solutions include cuboids or spheres. Furthermore, other primitive options lack compacity (i.e., they have too many parameters), leading to a low efficiency of storage of the resulting 3D model.

Within this context, there is still a need for an improved solution for generating a 3D model representing a factory.

**SUMMARY**

It is therefore provided a computer-implemented method for generating a 3D model representing a factory. The method comprises obtaining a point cloud from a scan of the factory. The method comprises fitting the point cloud with linear CAD extrusions.

The method may comprise one or more of the following:

- the method further comprises fitting the point cloud with revolution CAD extrusions, each CAD extrusion fitting a respective segment of the point cloud, and the fitting comprising, for said respective segment:

    o selecting a type for the CAD extrusion among a linear type and a revolution type; and
    o fitting the respective segment with a CAD extrusion of the selected type;

- the selection of the type comprises:

    o applying a neural network configured to take as input the segment and to output a type for the CAD extrusion among a linear type and a revolution type; or
    o determining a set of candidate extrusion axes from the segment, and, for each candidate extrusion axis of the set of candidate extrusion axes, performing one or more identifications of a type for the CAD extrusion among a linear type and a revolution type;

- the determining of the set of candidate extrusion axes is based on a principal component analysis of the segment;
- the performing of the one or more identifications comprises performing one or more of:

 o a first identification comprising:

  ▪ determining horizontal slice volumes along the candidate extrusion axis, each horizontal slice volume being delimited by two respective planes perpendicular to the candidate extrusion axis;
  ▪ for each horizontal slice volume, extracting the points of the segment included in the horizontal slice volume, thereby forming a subset of points; and
  ▪ for each subset:

   • projecting the points of the subset on a plane orthogonal to the candidate extrusion axis;
   • determining a contour of the projected points; and
   • quantifying a similarity of the determined contour with a circle;
   • determining the revolution type when an average of the quantified similarities is higher than a threshold; and

 o a second identification comprising:

  ▪ determining vertical slice volumes along the candidate extrusion axis, each vertical slice volume being delimited by two respective planes radial to the candidate extrusion axis;
  ▪ for each vertical slice volume, extracting the points of the segment included in the vertical slice volume, the extracted points forming a subset of points; and
  ▪ for each subset, projecting the points of the subset on a middle plane radial to the candidate extrusion axis, the middle plane being substantially centered between the two respective planes delimiting the vertical slice volume of the subset;
  ▪ for each pair of the subsets, computing a distance between the projected points of each subset of the pair; and
  ▪ determining the revolution type when an average of the computed distances is lower than a threshold;

- the selection of the type further comprises determining a type for the CAD extrusion based on a combination of the results of the performed identifications;
- the method further comprises, after the selection of the type, determining a profile for the CAD extrusion of the selected type;
- the determining of the profile comprises:

 o selecting an extrusion axis for the CAD extrusion of the selected type among the set of candidate extrusion axes;
 o projecting the points of the segment on a projection plane, the projection plane being:

  ▪ a plane perpendicular to the extrusion axis when the selected type is the linear type, or
  ▪ a plane radial to the extrusion axis when the selected type is the revolution type; and

 o determining a contour of the projected points;

- the determined contour comprises a subset of the projected points, the determining of the profile further comprising simplifying the determined contour based on a reduction of the number of projected points that the subset of the determined contour comprises;
- the selection of the type and/or the determining of the profile is/are performed iteratively, each new iteration comprising:

 o sampling a new set of candidate extrusion axes in a cone around a previous extrusion axis, the previous extrusion axis being among the set of candidate extrusion axes considered in the previous iteration; and
 o repeating the selection of the type and/or the determining of the profile with the new set of candidate extrusion;

- the selecting of the extrusion axis comprises applying a neural network configured to takes as input the segment and to output the extrusion axis, the neural network being trained according to the selected type;
- the method further comprises, after the fitting of the point cloud with the linear CAD extrusions and/or the revolution CAD extrusions:

o computing a connectivity graph based on the linear CAD extrusions and the revolution CAD extrusions, the connectivity graph comprising nodes representing the linear CAD extrusions and the revolution CAD extrusions and edges each between a pair of the nodes, each edge representing an intersection between the CAD extrusions pairs that the nodes of the pair represent; and

o connecting one or more of the linear CAD extrusions and the revolution CAD extrusions based on the connectivity graph; and/or

- the method further comprises using the generated 3D model to rearrange the factory.

It is further provided a computer program comprising instructions for performing the method.

It is further provided a computer readable storage medium having recorded thereon the computer program.

It is further provided a system comprising a processor coupled to a memory, the memory having recorded thereon the computer program. Optionally, the processor may be coupled to a graphical user interface.

## BRIEF DESCRIPTION OF THE DRAWINGS

Non-limiting examples will now be described in reference to the accompanying drawings, where:

- FIG. 1 illustrates an example of the factory;
- FIG. 2 shows examples of CAD extrusions;
- FIG.s 3 and 4 illustrate examples of identifications;
- FIG. 5 illustrates an example of iterative performing of the type selecting;
- FIG. 6 illustrates an example of the determining of the profile for the linear extrusion type;
- FIG. 7 illustrates an example of the determining of the profile for the revolution extrusion type;
- FIG. 8 illustrates examples of generated 3D model;
- FIG. 9 shows an example of a graphical user interface; and
- FIG. 10 shows an example of the system.

## DETAILED DESCRIPTION

It is proposed a computer-implemented method for generating a 3D model representing a factory. The method comprises obtaining a point cloud from a scan of the factory. The method comprises fitting the point cloud with linear CAD extrusions. Such a method is an improved solution for generating a 3D model representing a factory.

Notably, the method allows generating a 3D model representing the factory. Indeed, the point cloud gives information about the spatial location of the objects inside the factory, and the fitting of this point cloud with the linear CAD extrusions thus converts this spatial location information into information about the physical boundary of these objects inside the factory. Generating a 3D model with this information on the boundary of the objects is particularly relevant, for example to assess collisions or other factory incidents of the like. Moreover, the generated 3D model is adapted for CAD software solutions. Indeed, the generated 3D model comprises linear CAD extrusions which can be directly imported in a CAD software. The generated 3D model can therefore directly be used in a CAD software. After the importation, a user (e.g., an engineer or an architect) can immediately start manipulating the generated 3D model using the CAD software, for example for rearranging the factory (e.g., by moving the fitted linear CAD extrusions in the 3D model). Furthermore, the generated 3D model is an accurate representation of the factory. Indeed, linear CAD extrusions provide an expressive representation of objects inside the factory. In particular, the generated 3D model is accurate even if the point cloud is incomplete (e.g., with voids having no points) and/or noisy. Indeed, linear CAD extrusions use a reduced number of parameters, which makes it possible to smooth out these irregularities during fitting. Additionally, the method allows generating a 3D model having a reduced storage space requirement. Indeed, CAD extrusions are completely defined by a reduced set of parameters, and the storing of the 3D model thus only requires storing the set of parameters of each 3D extrusions. Storing sets of parameters as in the claimed method uses less storage space than storing the point cloud (i.e., the coordinates of each point of the point cloud).

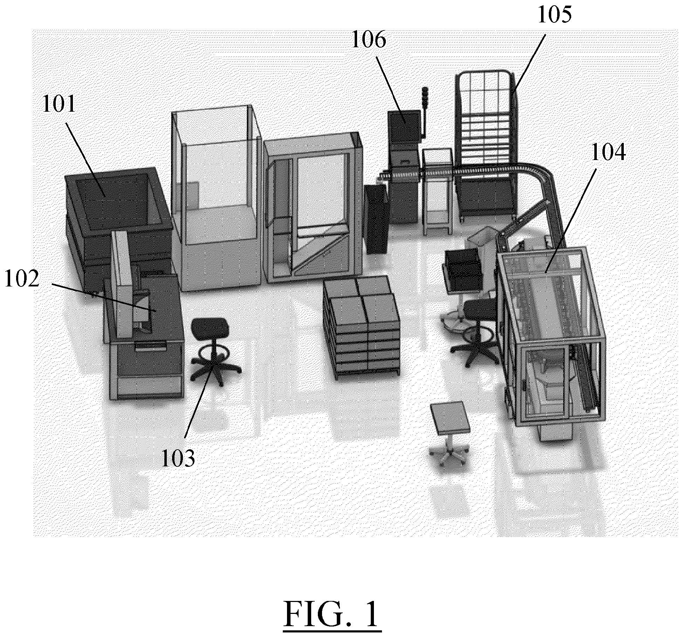

The method may be included in an operation process of the factory, which may comprise, after the performing of the method, using the 3D model to rearrange the factory. Different examples of the operation process are now discussed with reference to FIG. 1 illustrating an example of factory.

For example, the operation process may comprise determining a layout of the factory. The fitted linear CAD extrusions may represent objects inside the factory. For example, the objects may include work tools, production lines 104, work machines (such as trucks 101, 105, pallets, forklifts or robot) or work equipment (such as chairs 103, lamps, ladders or workstations 102, 106). Each object of the factory may be represented by one or more linear CAD extrusions. For example, a chair may be fitted by two linear CAD extrusions (one for the back of the chair and another one for the feet). The determining of the layout may comprise, for each object of the factory, associating the one or more linear CAD extrusions representing the object. The determining of the layout may comprise deducing the relative positions of the objects inside the factory in the real-world based on those of the associated CAD linear extrusions in the 3D model. For example, the deducing of the relative positions of the objects may include determining a distance between two adjacent objects inside the factory (e.g., a distance between two adjacent production lines) and/or a free distance from other objects around a given object (e.g., around a workstation). The determining of the distance may comprise computing a distance between the relative positions of the CAD linear extrusions associated with the two adjacent objects and/or with the object that is the closest to the given object and the given object.

Additionally or alternatively, the operation process may comprise identifying operational issues in the layout of the factory. For example, the operational issues may include a loss of efficiency in operation, such as a poor layout of production lines. For example, one production line may be far away from another production line (e.g., higher than a maximum), which results in a long transport of goods between the two production lines. Alternatively or additionally, the operational issues may include identifying that one or more workers cannot do their job properly. The identifying of operational issues may comprise determining spaces/distances between objects in the factory (e.g., between different production lines). The method may comprise determining spaces/distances between the CAD linear extrusions associated with each object and deducing the spaces/distances between objects in the factory from the determined spaces/distances between the CAD linear extrusions associated with each object. The identifying of operational issues may be based on the determined spaces/distances between objects in the factory. For example, the method may comprise identifying an operational issue when the space/distance between two of the objects is less than a minimum distance required for a worker (or equipment such as a pallet or a forklift) to pass. Alternatively or additionally, the operational issues may also include a safety risk in the operating of the factory. For example, the operation process may comprise assessing collisions or other factory incidents of the like. The operation process may comprise simulating the operating of the factory based on the determined layout (including, e.g., simulating movements of workers and/or work machines) and determining trajectories of objects inside the factory (e.g., of the workers and/or the work machines). Then, the operation process may comprise assessing collisions or other factory incidents of the like based on the determined trajectories and the 3D model, thereby identifying one or more safety risks in the operating of the factory. For example, the safety risk may be a robot of the factory passing close to or colliding with a worker (e.g., with less than a safe distance between them). In that case, the identifying may comprise determining a respective trajectory for each robot that the factory comprises, and, for each determined trajectory, verifying the distance between the workers of the factory and the determined trajectories is higher than the safe distance.

Additionally or alternatively, the operation process may comprise determining a new layout for the factory. In this example, the scan of the factory may be a scan of the current layout of the factory and the determined new layout may be optimized with respect to the current layout. For example, the new layout may be optimized with respect to the operation of the factory and/or the security of the factory. The determining of the new layout may be based on the identifying of operational issues as previously discussed. The operational issues identified may be operational issues identified in the current layout and these operational issues may be resolved in the new layout. For example, the determining of the new layout may comprise moving one or more production lines in the current layout so as to optimize efficiency. Alternatively or additionally, the determining of the new layout may comprise rearranging (e.g., displacing spatially) one or more workstations so as to improve the work efficiency of workers (e.g., by reducing muscular fatigue or the distances workers have to travel in the performance of their work tasks). Alternatively or additionally, the determining of the new layout may comprise rearranging (e.g., displacing spatially) one or more robot trajectories or workstations so as to improve safety (e.g., by increasing the distance between workers and robot trajectories). After the determining of the new layout for the factory, the operation process may comprise using the determined new layout for rearranging the factory according to the determined new layout. For example, the operation process may comprise moving in the real-world the objects of the factory in such a way that the layout of the real-world factory becomes the new determined layout.

In other examples, the method may be include in a compression process. The compression process may comprise obtaining the point cloud, e.g., by scanning the factory. The compression process may comprise recording the point cloud, e.g., on a nonvolatile memory. Then, the compression process may comprise performing the method with the obtained point cloud, thereby generating a 3D model representing the factory. The 3D model may comprise the linear CAD extrusions fitted on the point cloud. The compression process may comprise recording the generated 3D model representing the factory, e.g., on the nonvolatile memory. The recording of the 3D model may occupy less memory space on the nonvolatile memory than the recording of the point cloud. Indeed, the recording of the linear CAD extrusions occupies less memory space than the recording of the coordinates of each point of the point cloud. After the recording of the 3D model, the compression process may comprise deleting from the nonvolatile memory the point cloud, thereby having only the 3D model recorded on the nonvolatile memory. The compression process therefore allows obtaining a 3D model that occupies less memory space in nonvolatile memory.

The method generates a 3D model of the factory, i.e., a 3D model representing the factory inside of which the scan is performed. The 3D model may represent a portion of the factory. For example, the 3D model may represent only a part of the objects in the factory (e.g., the objects in the factory without the floor). The point cloud may be obtained from a scan of only this part of the objects in the factory. Alternatively, the method may comprise removing a given portion of an initial point cloud (e.g., points sampled on the floor), thereby obtaining the point cloud, and performing the fitting with obtained point cloud (i.e., without the removed portion). The method may comprise generating the 3D model based on the fitted linear 3D extrusions, e.g., by associating each object inside the factory with one or more linear CAD extrusions as previously discussed. The one or more linear CAD extrusions may form together a modeled object representing the object of the factory associated with the one or more linear CAD extrusions. The 3D model may thus comprise, for each object inside the factory, a respective modeled object representing the object inside the factory, the respective modeled object comprising the one or more linear CAD extrusions associated with the object. At least one of the fitted linear CAD extrusions may be different from a cuboid, e.g., more complex than a cuboid. For example, at least one of the fitted linear CAD extrusions may have a profile that may contain more than four sides and/or that may comprise at least one curvilinear and portion. The fitting may comprise fitting the point cloud with at least one such linear CAD extrusion more complex than a cuboid.

The generated 3D model may be a modeled object. A modeled object is any object defined by data stored e.g. in the database. By extension, the expression "modeled object" designates the data itself. According to the type of the system, the modeled object may be defined by different kinds of data.

By CAD solution (e.g., a CAD system or a CAD software), it is additionally meant any system, software or hardware, adapted at least for designing a modeled object (e.g., representing objects inside the factory) on the basis of a graphical representation of the modeled object and/or on a structured representation thereof (*e.g.* a feature tree), such as CATIA. In this case, the data defining a modeled object comprise data allowing the representation of the modeled object. A CAD system may for example provide a representation of CAD modeled objects using edges or lines, in certain cases with faces or surfaces. Lines, edges, or surfaces may be represented in various manners, e.g. non-uniform rational B-splines (NURBS). Specifically, a CAD file contains specifications, from which geometry may be generated, which in turn allows for a representation to be generated. Specifications of a modeled object may be stored in a single CAD file or multiple ones. The typical size of a file representing a modeled object in a CAD system is in the range of one Megabyte per part. And a modeled object may typically be an assembly of thousands of parts.

In the context of CAD, a modeled object may typically be a 3D modeled object, e.g. representing objects (or a part of objects) inside the factory. By "3D modeled object", it is meant any object which is modeled by data allowing its 3D representation. A 3D representation allows the viewing of the part from all angles. For example, a 3D modeled object, when 3D represented, may be handled and turned around any of its axes, or around any axis in the screen on which the representation is displayed. This notably excludes 2D icons, which are not 3D modeled. The display of a 3D representation facilitates the determining of a new layout for the factory (i.e. increases the speed at which engineers statistically accomplish their task). This speeds up the rearranging of the factory in the real-world, as the determining of the new layout for the factory is part of the rearranging of the factory.

A CAD system may be history-based. In this case, a modeled object is further defined by data comprising a history of geometrical features. A modeled object may indeed be designed by a physical person (i.e., the designer/user) using standard modeling features (e.g. extrude, revolute, cut, and/or round) and/or standard surfacing features (e.g. sweep, blend, loft, fill, deform, and/or smoothing). Many CAD systems supporting such modeling functions are history-based system. This means that the creation history of design features is typically saved through an acyclic data flow linking the said geometrical features together through input and output links. The history based modeling paradigm is well known since the beginning of the 80's. A modeled object is described by two persistent data representations: history and B-rep (i.e. boundary representation). The B-rep is the result of the computations defined in the history. The shape of the part displayed on the screen of the computer when the modeled object is represented is (e.g. a tessellation of) the B-rep. The history of the part is the design intent. Basically, the history gathers the information on the operations which the modeled object has undergone. The B-rep may be saved together with the history, to make it easier to display complex parts. The history may be saved together with the B-rep in order to allow design changes of the part according to the design intent.

The modeled object generated by the method may be a CAD model, for example comprising or consisting in a feature tree and/or a B-rep. The CAD model may be feature-based (*e.g.* it may comprise a feature tree, and optionally a corresponding B-rep obtained by executing the feature tree). A feature-based 3D model allows the detection and an automatic resolution of a geometry error in a CAD model such as a clash (e.g., between modeled objects representing two different objects of the factory). A clash is an interpenetration between two parts of a 3D model for example due to their relative motion. Furthermore, this clash may sometimes only be detected via a finite element analysis based on the CAD feature-based model. Therefore, a resolution of a clash can be performed with or automatically by the CAD solution by iteratively modifying the parameters of the features and doing a finite element analysis.

A key characteristic of a CAD model is that it may be designed exactly and unambiguously by chaining a small number of high-level parameterized design operations (including for example, but to limited to, sketch, CAD extrusion, chamfer) and edited by modifying its high-level parameters. That this is a key distinction with the polyhedral representations such as a triangular surface mesh which may represent any 3D shape but do not provide modification or parameterization capabilities required in an industrial design context.

As CAD model is a parameterized model of an object, it is lighter in terms of memory footprint than other models such as models containing a point cloud. Indeed, instead of storing the collection of points of the point cloud, a CAD model allows the storing of a list of features and parameters, which is lighter in terms of storage and memory footprint. Working on CAD models thus reduced memory requirements for the underlying systems in addition to facilitate editability of the model. This amounts to say that a point cloud to CAD conversion process in fact compresses the point cloud into a CAD model which is lighter in terms of memory requirements (e.g. footprint), in addition to transforming the point cloud into a more easily editable CAD model.

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g., one for the program, and possibly one for the database).

The obtaining of the point cloud may comprise scanning the factory, e.g., using a laser scanner or any other tool configured to acquire a point cloud from a scan. The scanning of the factory may be a scanning of the inside of the factory, i.e., a scanning of the objects inside the factory. For example, the scanning may comprise scanning several points on the surface of each object inside the factory, or of each object within a portion of the factory (i.e., scanning a part of the objects inside the factory). The point cloud may comprise, for each object, a respective portion of points scanned on the object (e.g., distributed over a visible outer surface of the object). Each point of the respective potion may correspond to a respective point on the visible outer surface of the object. Alternatively, the scanning of the factory may already have been performed and the point cloud obtained from the already performed scanning may be recorded, e.g., in a memory or a database. In that case, the obtaining of the point cloud may comprise retrieving from the database or the memory the point cloud of the factory.

A CAD extrusion is an operation or the result of an operation that consists in sweeping a profile. The profile may be planar, for example a planar surface or a planar curve. The sweep may be guided by a curve. A CAD extrusion may be of a linear type (referred to as linear CAD extrusion). A CAD extrusion of a linear type may result from the executing of a linear CAD extrusion operation. For a linear CAD extrusion, the sweep of the profile may be guided by a linear curve. Alternatively, a CAD extrusion may be of revolution type (referred to as revolution CAD extrusion). A CAD extrusion of a revolution type may result from the executing of a revolution CAD extrusion operation. For a revolution CAD extrusion, the sweep of the profile may be guided by a rotation axis, that is, rotation of profile around said axis.

The CAD extrusion operation may define the respective volume of the CAD extrusion. A linear CAD extrusion may have a shape of constant cross section along a linear curve (which is along an axis of translation of the linear CAD extrusion operation from which the linear CAD extrusion is created). A revolution CAD extrusion may have a constant cross-sectional shape around an axis (which is the axis of revolution of the revolution CAD extrusion operation from which the revolution CAD extrusion is created).

A CAD extrusion may comprise a set of parameters. The set of parameters may be taken as input during the executing of the CAD extrusion operation creating the CAD extrusion. The set of parameters may completely define the executing of the CAD extrusion operation, i.e., may completely define the volume created by the CAD extrusion operation (i.e., the volume of the resulting CAD extrusion). The set of parameters may depend on the type of CAD extrusion. The set of parameters of a CAD extrusion may comprise at least one parameter that is common with another type of CAD extrusion (i.e., at least one common parameter). For example, the set of parameters of a CAD extrusion which is of the linear type or of the revolution type may include a profile and a spatial 3D transformation matrix. A profile may comprise a list of ordered 2D points. The list of ordered 2D points may form a closed contour by joining the 2D points together with lines in the order in which they are listed. The spatial 3D transformation matrix may describe the rotation and translation between a world coordinate system and a primitive coordinate system. Alternatively or additionally, the set of parameters of a CAD extrusion may comprise at least one parameter that is specific to the type of the CAD extrusion (i.e., at least one specific parameter). For example, the set of parameters of a CAD extrusion which is of the linear type may include a depth parameter (e.g., a scalar). The depth parameter may specify a third dimension of a sketch (or profile, i.e., the surface of a cross-section in a plane perpendicular to the axis of extrusion). In other words, this parameter quantifies by how much, during the executing of the linear CAD extrusion, the sketch is pulled in the direction orthogonal to the plane.

Each linear CAD extrusion may fit a respective portion of the point cloud. The point cloud may be partitioned in several segments, each segment comprising points belonging to a respective portion of the point cloud. The segmentation of the point cloud in segments may have been performed prior to the method, or may be included in the method. The segmentation may have been performed as known in the art. For example, the segmentation may have been performed using the algorithm disclosed in one of the documents Landrieu, L., & Simonovsky, M. (2017), "Large-scale Point Cloud Semantic Segmentation with Superpoint Graphs" (https://doi.org/10.48550/ARXIV.1711.09869) or Lin, C., Liu, L., Li, C., Kobbelt, L., Wang, B., Xin, S., & Wang, W. (2020), "SEG-MAT: 3D Shape Segmentation Using Medial Axis Transform" (https://doi.org/10.48550/ARXIV.2010.11488) or the VHACD algorithm (https://github.com/Unity-Technologies/VHACD). The segmentation may comprise (e.g., for the algorithm disclosed in the document entitled "Large-scale Point Cloud Semantic Segmentation with Superpoint Graphs") applying the algorithm directly to the provided point cloud so as to output the segments. Alternatively, the segmentation may comprise (e.g., for the algorithm disclosed in the document "SEG-MAT: 3D Shape Segmentation Using Medial Axis Transform" or the VHACD algorithm), prior to the applying of the algorithm, transforming the provided point cloud into a mesh/a representation (called a medial axis transform) and applying the algorithm to this mesh/representation (e.g., such as disclosed in https://www.cs.ucdavis.edu/~amenta/pubs/sm.pdf). Each linear CAD extrusion may fit a respective segment, i.e., may encompass the points inside the respective portion belonging to the segment. The points belonging to a segment may form together a respective volume. The fitting may comprise, for each segment of the point cloud, determining the set of parameters of the linear CAD extrusion such that the volume that the points of the segment form together is substantially equal to that of the linear CAD extrusion. For each linear CAD extrusion, the determining of the set of parameters of the linear CAD extrusion may comprise determining the profile of the linear CAD extrusion and the depth of the linear CAD extrusion. The determining of the profile and the depth of the linear CAD extrusion may be based on the points belonging to the portion of the point cloud that the linear CAD extrusion fits. The fitting of the point cloud with the linear CAD extrusions may be fully automatic (e.g., the method may automatically determine the set of parameters of each linear CAD extrusion). Alternatively, the fitting of the point cloud with the linear CAD extrusions may be semi-automatic (e.g., the method may comprise, after the determining of each set of parameters, approving by the user each determined set of parameters).

The method allows directly obtaining a 3D model representing the factory. Indeed, the method fits the linear CAD extrusions directly on the point cloud, and the method thus allows automatically obtaining the 3D model after the obtaining of the point cloud. In particular, the linear CAD extrusions are adapted for CAD software, and the resulting 3D model is therefore directly usable by such CAD software. The user of the CAD software may thus directly start working on the 3D model after the performing of the method. For example, the user may directly rearrange the factory by moving the linear CAD extrusions associated with objects inside the factory. The generated 3D model can directly be used in a CAD software. Furthermore, the 3D model is particularly accurate, i.e., represents accurately the factory. Indeed, the linear CAD extrusions provide an expressive representation of objects inside the factory. Additionally, the 3D model uses a reduced storage space. Indeed, CAD extrusions are completely defined by a reduced set of parameters, and the storing of the 3D model thus only requires storing the set of parameters of each 3D extrusions. Such a storing of sets of parameters uses less storage space than storing the point cloud or than storing sets of primitives as in prior art methods.

The method may perform the fitting of the point cloud with linear CAD extrusions and the fitting of the point cloud with revolution CAD extrusions at the same time. For example, the method may comprise, for each segment, fitting the segment with a CAD extrusion (the CAD extrusion being a linear CAD extrusion or a revolution CAD extrusion). The method may fit all segments sequentially one after the other or all together (for example, using parallel processing). The method may comprise, before the fitting, selecting a type for the CAD extrusion among a linear type and a revolution type. Then, the method may comprise fitting the segment with a CAD extrusion of the selected type (i.e., a linear CAD extrusion when the selected type is the linear type and a revolution CAD extrusion when the selected type is the revolution type). The selection of the type may depend on whether one of the types is relevant or not (e.g., using a fitting rate which may indicate a fitting quality). For example, the selecting of the type may comprise determining whether a linear CAD extrusion (respectively a revolution CAD extrusion) fits the segment (e.g., by comparing the fitting rate with a threshold). Then, if the method determines that the linear CAD extrusion (respectively the revolution CAD extrusion) fits the segment, the method may comprise fitting the segment with the linear CAD extrusion (respectively the revolution CAD extrusion). Otherwise, the method may comprise fitting the segment with a revolution CAD extrusion (respectively a linear CAD extrusion). These two types of CAD extrusion allow any type of object in a factory to be represented accurately enough, in particular accurately enough to evaluate the spaces between objects, and thus to perform a rearrangement of the factory.

The selection of the type may be based on a neural network. The neural network may be configured to take as input a segment of the point cloud (thus, a point cloud itself) and to output a type for the CAD extrusion among a linear type and a revolution type. The neural network may have been trained in a supervised manner. For example, the training of the neural network may be based on a database comprising segments of point cloud and, for each segment, a respective type for the segment among a linear type and a revolution type. The respective type for the segment may be the type of CAD extrusion that fits the segment (e.g., which has the highest fitting rate). The training of the neural network may be based on this database. The neural network architecture may comprise an encoder followed by $N_{linear}$ (e.g., 2, 3 or 4) blocks, each comprising a linear layer, a possible batch normalization step and a function activation (e.g., ReLu, leaky ReLu, Tanh). The neural network architecture may further comprise a final layer (e.g., comprising a linear layer followed by a softmax activation function). The final layer may be configured to output a vector of length 2, representing the generative operation predicted by the network. The method may comprise applying the neural network by providing as input the segment to the neural network and selecting for the segment the type outputted by the neural network.

Alternatively, the selection of the type may be based on one or more identifications of a type. In that case, the selection may comprise determining a set of candidate extrusion axes. The determining of the set of candidate extrusion axes may be based on a principal component analysis (PCA). Each candidate extrusion axis of the set may be associated with a principal direction of the segment. For example, each candidate extrusion axis may be associated with a principal component of the points belonging to the segment. The principal components may be a sequence of p unit vectors wherein the i-th vector points a direction of a line that best fits the points of the segment while being orthogonal to the first i-1 vectors. For example, the line may best fit the points by minimizing an average squared distance from the points to the line. The principal components may constitute an orthonormal basis in which different individual dimensions of the points are linearly uncorrelated. PCA is the process of computing the principal components of the points of the segment. The determining of the set of candidate extrusion axes may comprise using only first principal components. For example, the set of candidate extrusion axes may include only the first three principal components. Then, for each candidate axis of the set of candidate extrusion axes, the method may comprise performing one or more identifications of a type for the CAD extrusion among a linear type and a revolution type. Each identification may consider the candidate extrusion axis as an extrusion axis for a CAD extrusion (i.e., the direction of the extrusion for the linear type or the direction of the rotation axis for the revolution type). Each identification may compute a fitting rate of the segment with a CAD extrusion type. This fitting rate may quantify the fitting of the segment with one of the CAD extrusion types (linear or revolution). The performing of each identification may comprise determining a respective candidate type for the segment.

After the performing of the identifications, the selection of the type may further comprise determining a type for the CAD extrusion based on a combination of the results of the performed identifications. For example, each identification may comprise evaluating an extent to which a CAD extrusion of a type having the candidate axis fits the segment. The evaluating may comprise recording a result for the identification (e.g., a fitting score quantifying the fitting of the CAD extrusion on the segment). The selection may comprise considering each of the recorded results and selecting the type and the candidate axis so as to maximize the fitting score. For example, the selection may comprise selecting the type and the candidate axis given by the identification having the highest fitting score. Alternatively, the selection may comprise computing a sum of the fitting scores recorded for each candidate axis and each type and selecting the candidate axis and the type having the highest sum of fitting scores.

With reference to FIG.s 2 to 8, an example of implementation of the method is now discussed.

Deep Neural Networks (DNNs) are a powerful set of techniques for learning in Neural Networks which is a biologically-inspired programming paradigm enabling a computer to learn from observational data. In object recognition, the success of DNNs is attributed to their ability to learn rich midlevel media representations as opposed to hand-designed low-level features (Zernike moments, HOG, Bag-of-Words, SIFT, etc.) used in other methods (min-cut, SVM, Boosting, Random Forest, etc.). More specifically, DNNs are focused on end-to-end learning based on raw data. In other words, they move away from feature engineering to a maximal extent possible, by accomplishing an end-to-end optimization starting with raw features and ending in labels.

All learning-based methods follow the same kind of pattern. They comprise an offline stage, in which intensive computations may be performed, and an online stage in which performance is the key as to achieve the targeted task given the input data.

The term "CAD extrusion" (or "CAD operation") refers to the common operations used in CAD workflows that, based on 2D elements (2D contours and curves), generate 3D geometry. In this example implementation, the CAD extrusions considered are the linear CAD extrusion and the revolution CAD extrusion (also referred to as Shafts). In other implementations, other common operations may be considered, such as Lofts (extrusions guided by a guide curve) or "negative" extrusions (i.e., an extrusion that indicates removal of matter). In the case of negative extrusions, these negative extrusions may include negative linear extrusions, negative rotational extrusions or negative loft-type extrusions.

The example of implementation takes an object segmentation as input, and then applies the following steps for each segment. In a first step, the implementation comprises determining a generative operation of a primitive based on geometrical characteristics of the point cloud. This first step comprises selecting a type for the CAD extrusion among a linear type and a revolution type. These two types of CAD extrusion allow any type of object in a factory to be represented accurately enough, in particular accurately enough to evaluate the spaces between objects, and thus to perform a rearrangement of the factory. In a second step, the implementation comprises determining a set of parameters to input to the determined generative operation minimizing a reconstruction error. The implementation performs these two steps for each segment. After that, the implementation comprises a final step which consists in refining the input parameters of the generative operations so that the generated primitives (or CAD extrusions) are well-connected, therefore obtaining a 3D model representing a real 3D object.

The first step of selecting the type is now discussed in more details.

The implementation considers two generative operations (or two CAD extrusion types), as well as respective parameters for each generative operation. Different ways to determine which operation to use given a specific input segment are then discussed.

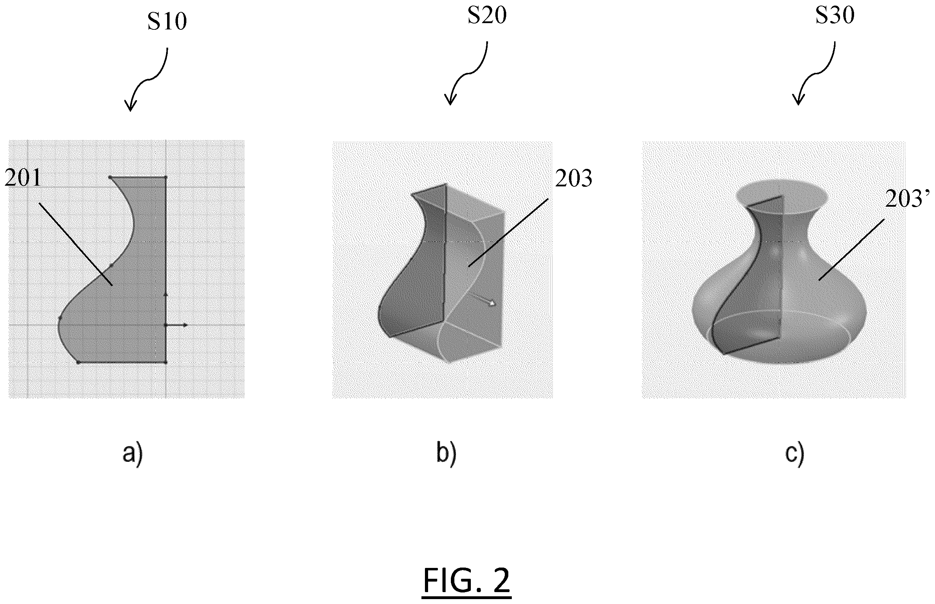

The use of CAD-inspired primitives facilitate integration in CAD software. The implementation focuses on linear extrusions (LE) and rotational (or revolution) extrusions (RE). FIG. 2 shows an example of these two types of CAD extrusions. The implementation uses these two operations to accurately approximate a large variety of shapes. In particular, these two operations are particularly well suited to represent parts of man-made objects. The fitting of each CAD extrusion comprises mainly two steps. The first step consists in creating S10 a 2D sketch 201 of the CAD extrusion. The second step consists in pulling the created 2D sketch in order to create a 3D shape. In particular, for a linear extrusion, the pulling comprises pulling S20 the sketch linearly in a direction orthogonal to a plane of the 2D sketch, thereby obtaining the 3D shape 203. For a rotational extrusion, the pulling comprises pulling S30 the 2D sketch around a revolution axis, thereby obtaining the 3D shape 203'.

These generative operations result in primitives that are easily interpretable and editable by CAD designers. The parameters of these generative operations are now detailed. The linear and the revolution types may comprise common parameters. The common parameters include a profile parameter. The profile parameter comprises a list of 2D points. The list of 2D points and the joining of these points together with lines in the order in which they are given form a closed contour. The common parameters include a spatial 3D transformation matrix. The spatial 3D transformation matrix describes the rotation and translation between the world coordinates and the primitive coordinates. The linear type comprises a specific parameter. The parameter specific to the linear type is a depth parameter. The depth parameter is a scalar. The depth parameter specifies a $3^{rd}$ dimension of the sketch. In other words, this parameter quantifies by how much the 2D sketch is "pulled" in the direction orthogonal to the plane. There is no extra specific parameter for the rotational extrusion.

Having defined two types of generative operations, the first step consists in selecting the type that will be the better fit for a given point cloud part. The selecting may be based on the following solutions.

A first solution consists in computing both the LE and the RE primitives and comparing which one is the best according to a given metric. The given metric may be the chamfer distance or the Hausdorff distance.

A second solution comprises geometrically analyzing the input point cloud. This second strategy is more efficient. First, the second solution comprises computing three principal components of the point cloud (based on a PCA). The second solution comprises using eigenvectors of the three principal components as candidate extrusion axes. Then, for each candidate extrusion axis $\overrightarrow{a_{extrusion}}$, the second solution comprises applying any combination (one, the other, or both) of the two following identifications.

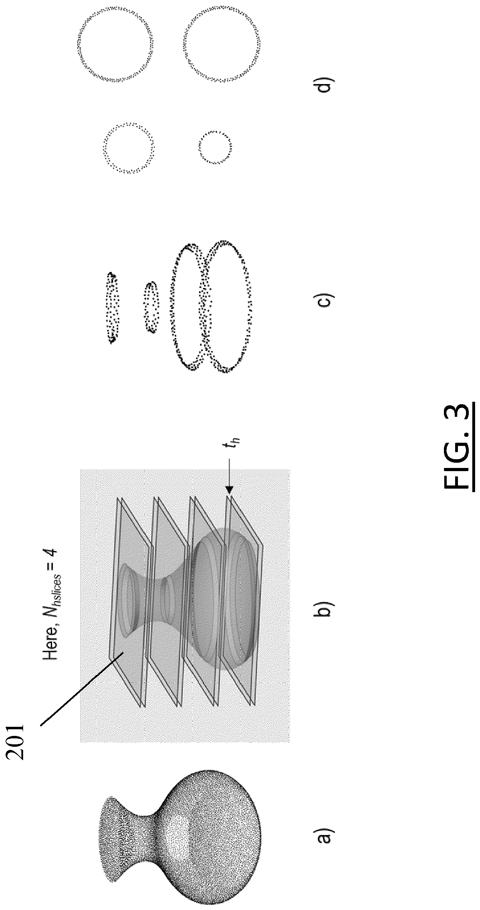

With reference to FIG. 3, a first identification is now discussed. The first identification considers $x_0$ and $x_1$ as the two extreme points of the point cloud by projection on $\overrightarrow{a_{extrusion}}$. The first identification defines

$$f_{projection} \colon \mathbb{R}^3 \to [0,1],$$

$$f_{projection}(x) = \frac{\overrightarrow{(x - x_0)} \cdot \overrightarrow{a_{extrusion}}}{\overrightarrow{(x_1 - x_0)} \cdot \overrightarrow{a_{extrusion}}}$$

The first identification comprises determining horizontal slice volumes along the candidate extrusion axis. Each horizontal slice volume is delimited by two respective planes perpendicular to the candidate extrusion axis. The determining horizontal slice volumes comprises extracting $N_{hslices}$ "horizontal" slices 201 from the input point cloud. For each horizontal slice volume, the first identification comprises extracting the points of the segment included in the horizontal slice volume, thereby forming a subset of points. Given $N_{slices}$ values $v_i$ between 0 and 1 (typically $v_i = i/(N_{slices} - 1)$, $i \in [\![0, N_{slices} - 1]\!]$ ), for each value $v_i$, the first identification comprises extracting the points $p$ from the point cloud for which $f(p) \in [v_i - t_h, v_i + t_h]$, wherein $t_h \in \mathbb{R}^{+*}$ is a parameter that represents the "thickness" of the slice considered.

Then, for each subset, the first identification comprises performing the following steps. A first step comprises projecting the points of the subset on a plane orthogonal to the candidate extrusion axis. For each subset $P_s$ of points obtained, the first identification comprises projecting $P_s$ on the plane orthogonal to $\overrightarrow{a_{extrusion}}$. A second step comprises determining a contour of the projected points. For example, the first identification comprises applying an alphashape algorithm to obtain a contour of the point cloud. The first identification comprises simplifying the resulting contour thanks to a line simplification algorithm (such as the Ramer-Douglas-Peucker (RDP) algorithm), thereby obtaining a simplified contour $C_s$. A third step comprises quantifying a similarity of the determined contour with a circle. For example, the first identification comprises computing $V_{circle}(C_s)$ using the following formula:

$$V_{circle}(C) = \exp\left(\left|\frac{2\pi r}{C_{perim}} - 1\right|\right) + \exp\left(\left|\frac{4\pi r^2}{C_{area}} - 1\right|\right)$$

wherein $r$ the average distance from a centroid of the point cloud to the points, $C_{perim}$ the perimeter of the contour and $C_{area}$ the area of the contour. This formula quantifies the similarity between a contour and a circle.

After the performing of the first, second and third steps for each subset, the first identification comprises determining the revolution type when an average of the quantified similarities is higher than a threshold. For example, if the average of $V_{circle}$ values if smaller than a certain threshold, the first identification comprises considering the first test as valid (i.e., determining that the selected type is the revolution type).

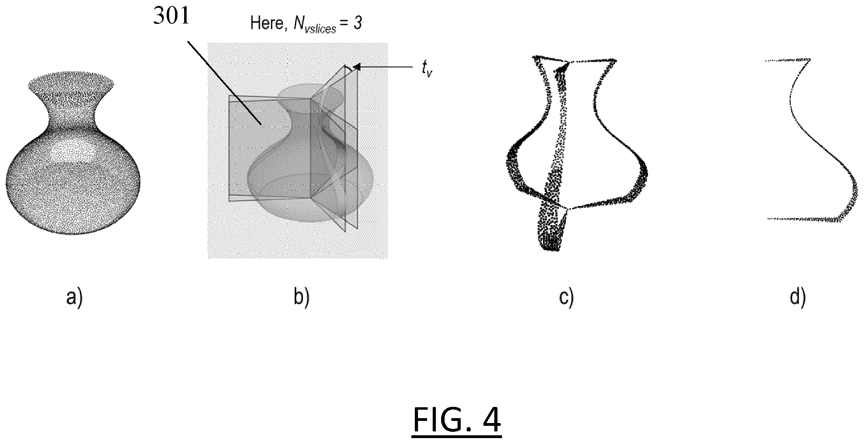

With reference to FIG. 4, a second identification is now discussed. The second identification considers $x_h$ a point from the input point cloud chosen at random, distinct from the centroid of the point cloud $x_c$. From $\overrightarrow{a_{extrusion}}$, $x_c$ and $x_h$, the second identification comprises building a coordinates system with $x_c$ as the origin,

$$\vec{w} = \frac{\overrightarrow{a_{extrusion}}}{\|\overrightarrow{a_{extrusion}}\|}, \quad \vec{u} = \frac{\overrightarrow{a_{extrusion}} \wedge \overrightarrow{x_c x_h}}{\|\overrightarrow{a_{extrusion}} \wedge \overrightarrow{x_c x_h}\|}$$

, and $\vec{v} = \vec{w} \wedge \vec{u}$ as the system's axes, $\wedge$ representing the standard vectorial product operator. The second identification comprises naming $P_h$ the plane defined by $x_c$, $\vec{u}$ and $\vec{v}$, and defining

$$g \colon \mathbb{R}^3 \to [0, 360]$$

$$g(x) = \frac{360}{2\pi} \times \cos^{-1} \frac{\overrightarrow{x - x_c} \cdot \vec{u}}{\|\overrightarrow{x - x_c}\|}$$

the operator that for each point in 3D space returns the angle parameter of the polar coordinates of its projection on $P_h$. The second identification comprises determining vertical slice volumes along the candidate extrusion axis, each vertical slice volume being delimited by two respective planes radial to the candidate extrusion axis. For example, the second identification comprises operating $N_{vslices}$ "vertical" slices 301 from the input point cloud. For each vertical slice volume, the second identification comprises extracting the points of the segment included in the vertical slice volume, the extracted points forming a subset of points. Given $N_{vslices}$ values $\propto_i$ between 0 and 360 (typically $\propto_i = 360 \times i/(N_{slices} - 1)$,

$$i \in [\![0, N_{slices} - 1]\!]$$

), for each value $\propto_i$, the second identification comprises extracting the points p from the point cloud for which $g(p) \in [\propto_i - t_v, \propto_i + t_v]$, wherein $t_h \in \mathbb{R}^{+*}$ is a parameter that represents the "thickness" of the slice considered. The second identification comprises obtaining $N_{vslices}$ subset point clouds $P_i$. For each subset, the second identification comprises projecting the points of the subset on a middle plane radial to the candidate extrusion axis. The middle plane is substantially centered between the two respective planes delimiting the vertical slice volume of the subset. For example, the second identification comprises projecting $P_i$ on the plane defined by $x_c$, $\vec{w}$ and $\vec{k_i}$, defined as the unitary vector part of $P_h$ such that the angle between $\vec{w}$ and $\vec{k_i}$ is equal to $\propto_i$, thereby obtaining $N_{vslices}$ 2D point clouds.

Then, for each pair of the subsets, the second identification comprises computing a distance between the projected points of each subset of the pair. For example, the second identification comprises computing a given distance (e.g., chamfer distance or Hausdorff distance) for any given two point clouds from the set of 2D point clouds. After the computing of the distances, the second identification comprises determining the revolution type when an average of the computed distances is lower than a threshold. For example, if the average of the distances is lower than a certain threshold, the second identification comprises considering the second test as valid (i.e., determining that the selected type is the revolution type).

The use of vertical slices for the first identification or horizontal slices for the second identification improves the selection of the type, in particular when the segment of points is incomplete (with voids having no points). Indeed, even if one slice is extracted at the location of one of these voids having no points, other slices are extracted at location that do not have these voids with no points. Thus, the use of slices allows the selection of an adequate type even when the segment of points includes voids.

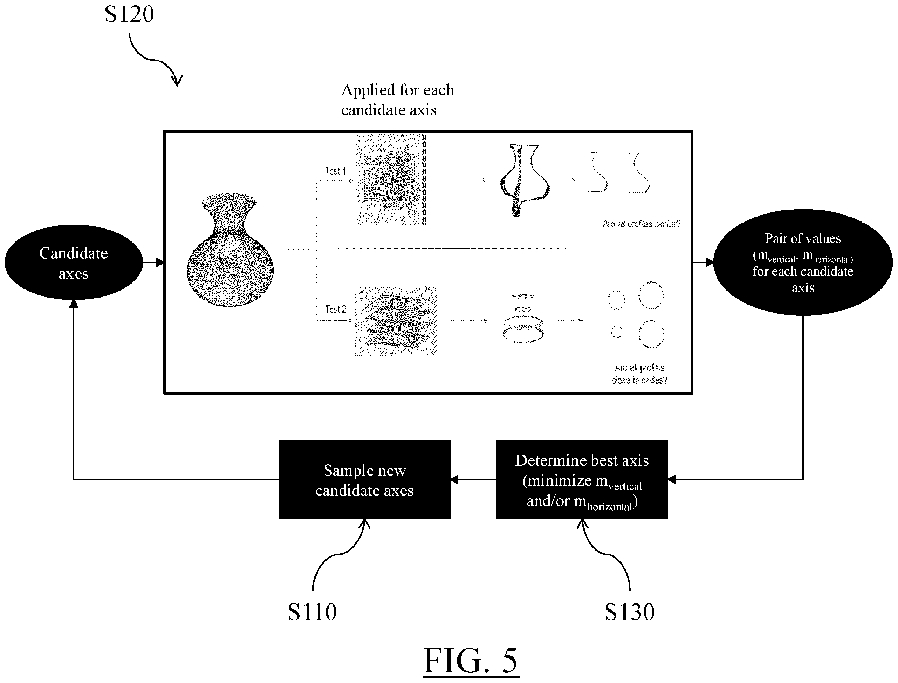

The first step of selecting the type may be iterative. FIG. 5 illustrates an example of algorithm for performing iteratively the selecting of the type. Each new iteration may comprise sampling S110 new candidate axes in a cone of a given radius $w$ around the previous best axis, thereby obtaining a new set of candidate extrusion axes. After the sampling, each new iteration may comprise, for each axis of the new set, performing S120 one or more of the identifications previously discussed. Then, each new iteration may comprise deciding the previous best axis for the next iteration based on the values of $m_{horizontal}$ or $m_{vertical}$ (e.g., depending on which identifications are performed), wherein $m_{horizontal}$ designates an average of the $V_{circle}$ values and $m_{vertical}$ designates an average of distances between the vertical slices. If only the first identification (resp. the second identification) is performed, the first step may comprise selecting as previous best axis the axis for which $m_{horizontal}$ (resp. $m_{vertical}$) is minimized. If both identifications are applied, the first step may comprise using only the value of $m_{horizontal}$. Indeed, the first identification is more robust to missing points. Missing points on a circle-type profile will not raise the value of $m_{horizontal}$ significantly, whereas a vertical slice extracted from an incomplete point cloud may vary significantly compared to the other slices. After the deciding of the previous best axis, the first step may comprise sampling new candidate axes and reapplying one identification, the other, or both, for each new candidate axes. The first step may comprise applying a given number $n_i$ of iterations, and reducing (e.g., for each new iteration) the radius of the cone in which the candidate axes are sampled, to ensure convergence.

A third solution for selecting the type is based on deep learning and uses a neural network. The third solution comprises treating the selecting of the type as a classification problem. The structure of the neural network may comprise an encoder. The structure of the neural network may further comprise $M_{linear}$ (e.g., 2, 3 or 4) blocks following the encoder. Each block may comprise a linear layer, a possible batch normalization step, and a function activation (e.g. ReLu, leaky ReLu, Tanh). The structure of the neural network may further comprise a final layer. The final layer may comprise a linear layer followed by a softmax activation function. The final layer outputs a vector of length 2, representing the generative operation predicted by the network. The training of this network may be based on a dataset of pairs each comprising an input point cloud and a generative operation class for the input point cloud. The generating and labelling of the training set may be based on two strategies. A first one comprises annotating a dataset of real object parts using the second alternative solution proposed above. A second one comprises generating a synthetic dataset by scripting sketches, linear and rotational extrudes, generating the resulting geometry and sampling points on that geometry.

The second step of determining the parameters of the generative operations is now discussed in more details. The determining of the parameters may depend on the selected type. The determining of the parameters comprises determining a profile for the CAD extrusion of the selected type. The determining of the profile comprises selecting an extrusion axis for the CAD extrusion of the selected type among the set of candidate extrusion axes. The determining of the profile comprises projecting the points of the segment on a projection plane. The projection plane depends on the selected type. When the selected type is the linear type, the projection plane is a plane perpendicular to the extrusion axis. When the selected type is the revolution type, the projection plane is a plane radial to the extrusion axis. The determining of the profile comprises determining a contour of the projected points. The determined contour comprises a subset of the projected points. Optionally, the determining of the profile may further comprise simplifying the determined contour based on a reduction of the number of projected points that the subset of the determined contour comprises (e.g., by applying the Ramer-Douglas-Peucker (RDP) algorithm to the determined contour). The determining of the profile is now discussed in more details for the linear type and for the revolution type separately.

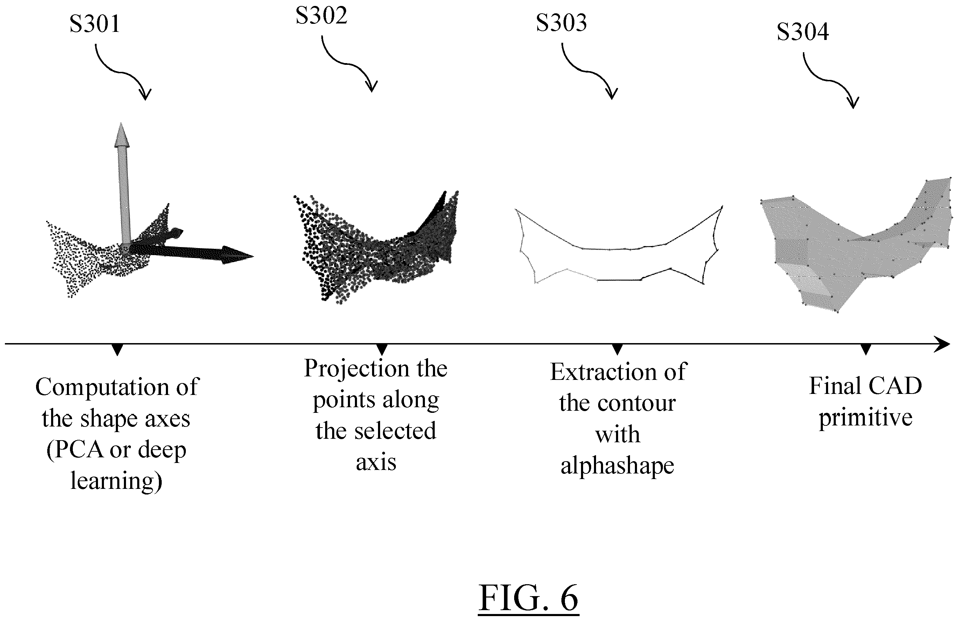

With reference to FIG. 6, the determining of the parameters for the linear extrusion type is now discussed. For the linear extrusion type, the determining of the parameters comprises the following steps. First, the determining of the parameters comprises computing S301 a center c of the segment point cloud and its principal component axes (e.g., based on the previous discussed PCA). The determining of the parameters comprises selecting an extrusion axis $a_{extrusion}$ among the three principal component axes (i.e., the three candidate axes). The selection of the extrusion axis may be based on different strategies. A first strategy comprises testing the three different candidate axes and selecting the one giving the best reconstruction score (e.g., according to a metric such as the chamfer distance or the Hausdorff distance). A second strategy comprises using the vector associated with the smallest eigen value. Then, the second strategy comprises using the center c and the extrusion axis $\alpha_{extrusion}$ to compute the transformation matrix.

Then, the determining of the parameters comprises projecting S302 the points of the segment on an affine plane defined by the extrusion direction and the center c of the point cloud. The determining of the parameters comprises extracting S303 a profile of the projected points using the alphashape algorithm. At the same time, the determining of the parameters comprises determining a thickness of the extrusion by considering a sum of the distance of the furthest point behind the affine plane (w.r.t. the extrusion axis) and the furthest point in front of the affine plane. The extracting S303 of the profile may comprise applying the Ramer-Douglas-Peucker (RDP) algorithm to simplify the obtained profile. This step allows smoothing the resulting primitive and removing insignificant variations in the profile. After the determining of the parameters, the method may comprise computing S304 a final CAD primitive (or CAD extrusion) of the linear extrusion type using the determined parameters.

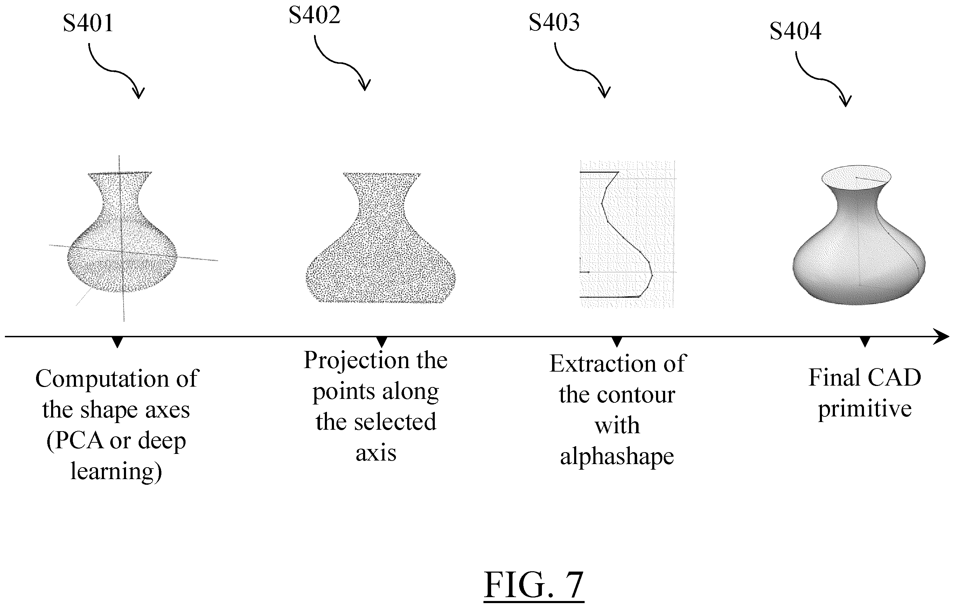

With reference to FIG. 7, the determining of the parameters for the revolution extrusion type is now discussed in more details. The determining of the parameters may comprise the following steps. First, the determining comprises computing S401 the center c of the segment point cloud and its three principal component axes (e.g., based on the previous discussed PCA). The determining of the parameters comprises selecting an extrusion axis $a_{rotation}$ among the three principal components (i.e., the three candidate axes). The selecting of the extrusion axis comprises projecting the points on three affine planes generated by the three principal component axes. Then, the selecting of the extrusion axis comprises applying the alphashape algorithm for each of the 2D projections. Finally, for each of the resulting profiles $P_i$, the selecting of the extrusion axis comprises computing $V_{circle}(P_i)$. The selecting of the extrusion axis comprises selecting $a_{rotation}$ as the axis whose profile $P_i$ extracted from its orthogonal projection has the smallest computed $V_{circle}(P_i)$. Indeed, the contour of the orthogonal projection of the full revolution shaft along its rotation axis should be close to a circle. Finally, the determining comprises using the center c and the selected extrusion axis $a_{rotation}$ to compute the transformation matrix.

Then, the determining comprises selecting S403 a profile of the projection along one of the two other principal component axes (those two profiles are expected to be similar so here the choice may be arbitrary). The axis along which the profile is selected is noted $a_{profile}$. The determining comprises cutting the contour in half along $a_{rotation}$, performing an RDP simplification of the contour cut in half, thereby obtaining a resulting simplified contour, and using the resulting simplified contour as the rotational extrusion profile. After the determining of the parameters, the method may comprise computing S404 a final CAD primitive (or CAD extrusion) of the revolution extrusion type using the determined parameters.

For the linear extrusion type and/or the revolution extrusion type, the determining of the parameters may comprise modifying the parameters of the alphashape or RDP algorithms to control the smoothness and the number of points of the resulting profile. Furthermore, the alphashape algorithm may deal with non-connex shapes and holes for the extruded face.

For the linear extrusion type and/or the revolution extrusion type, the determining of the parameters may be performed iteratively. Each new iteration may comprise sampling a new set of candidate extrusion axes in a cone around a previous extrusion axis. The previous extrusion axis may be among the set of candidate extrusion axes considered in the previous iteration. The previous extrusion axis may be the selected extrusion axis (i.e., $a_{extrusion}$ for the linear extrusion type and $a_{rotation}$ for the revolution extrusion type). Each new iteration may comprise repeating the determining of the profile with the new set of candidate extrusion. Each new iteration may comprise, for each sampled axis, computing a generative operation as previously described, computing a given reconstruction metric (e.g., chamfer or Hausdorff distance) and selecting the axis of the new set that minimizes the reconstruction metric as the previous extrusion axis for the next iteration.

Performing the determining of the parameters iteratively improves the accuracy of the determined parameters. In particular, each iteration reduces the risk that the result of the PCA is not relevant, especially when the PCA performs poorly due to noise in the input point cloud.

The determining of the parameters may be based on deep learning. The determining may comprise training two neural networks (one for the linear extrusion type and another one for the revolution extrusion type) on a regression task, to predict an optimal extrusion axis for the considered generative operation. Both networks may have the same architecture, but may be trained on different trainings sets. The architecture of both networks may comprise an encoder followed by $N_{linear}$ (e.g., 2, 3 or 4) blocks, each comprising a linear layer, a possible batch normalization step and a function activation (e.g., ReLu, leaky ReLu, Tanh). The architecture of both networks may further comprise a final layer (a linear layer with no activation function) configured to output a vector of length 3, representing the extrusion axis of the considered generative operation predicted by the network. Each network may be trained with a respective dataset comprising pairs of input point cloud and extrusion axis (one dataset for the linear extrusion type and one dataset for revolution extrusion type). The generating of a labelled training datasets may be based on two strategies. The first one is to annotate a dataset of real object parts using the previously described iterative solution. The second one is to generate a synthetic dataset by scripting sketches, linear and rotational extrudes, generating the resulting geometry (including the ground truth extrusion axes) and sampling points on that geometry.

The final step of refining the input parameters of the generative operations is now discussed in more details. The method may comprise applying a post-processing step to ensure that all the primitives are connected. The post-processing step comprises computing a connectivity graph, with the CAD-inspired primitives as nodes, and edges between the primitives that are connected (i.e., for which the intersection between the primitives is not empty). The connectivity graph comprises nodes representing the linear CAD extrusions and the revolution CAD extrusions and edges each between a pair of the nodes. Each edge represents an intersection between the CAD extrusions pairs that the nodes of the pair represent.

The post-processing step comprises connecting one or more of the linear CAD extrusions and the revolution CAD extrusions based on the connectivity graph. The connecting of the one or more linear CAD extrusions may be based on the following steps. The connecting may be such that biggest connected components of this graph remain the "main body". For each smaller connected component, the post-processing step comprises computing the smallest distance between:

- $P_{main\_body}$, the point cloud composed of all the point cloud segments corresponding to the primitives that make up the "main body", and
- $P_{connected\_component}$, the point cloud composed of all the point cloud segments corresponding to the primitives that make up the current connected component.

The point of $P_{main\_body}$ (resp. $P_{connected\_}$component) for which this distance is attained is noted $p_{main\_body}$ (resp. $p_{connected\_component}$). The post-processing step comprises applying the translation $\overline{p_{connected\_component}\,p_{main\_body}}$ to all the primitives of the smaller connected component.

The final step may comprise apply this post-processing step under an assumption that the original input point cloud makes up a single connected object. Thus, the translation applied to the disconnected components may be small enough not to harm the accuracy of the reconstructed CAD model.

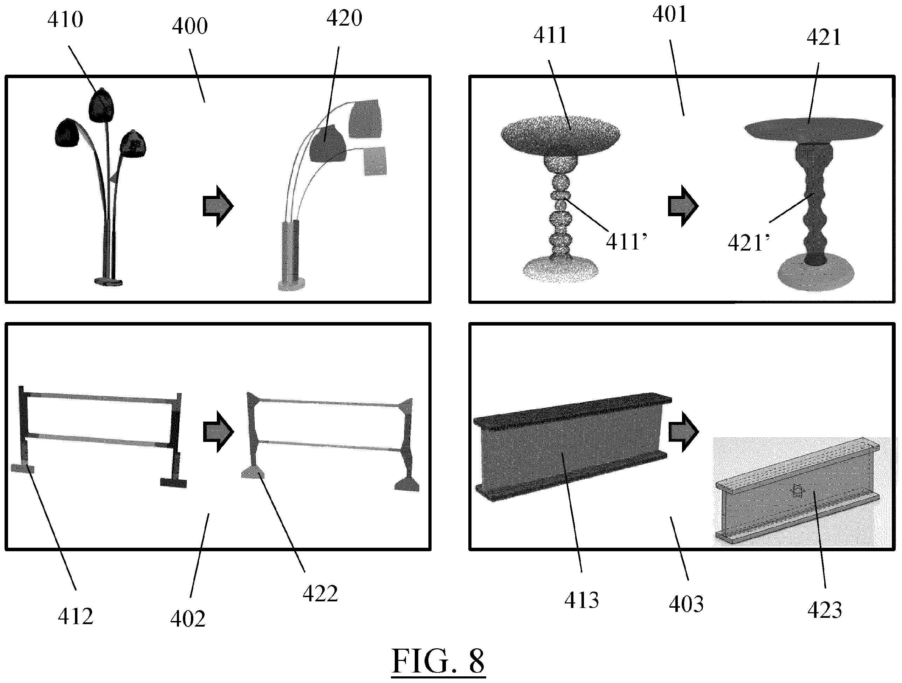

FIG. 8 shows examples of 3D models generated by the method. In particular, the figure shows four examples 400, 401, 402 and 403. For each example, the figure shows the segmented initial point cloud (410, 411, 412, 413) and the resulting 3D model (420, 421, 422, 423) generated by the method. For each segment of the initial point cloud, the generated 3D model comprises a respective CAD extrusion fitting the segment (e.g., in the second example 401, the CAD extrusion 421' of the 3D model 421 that fits the segment of points 411' of the point cloud 411).

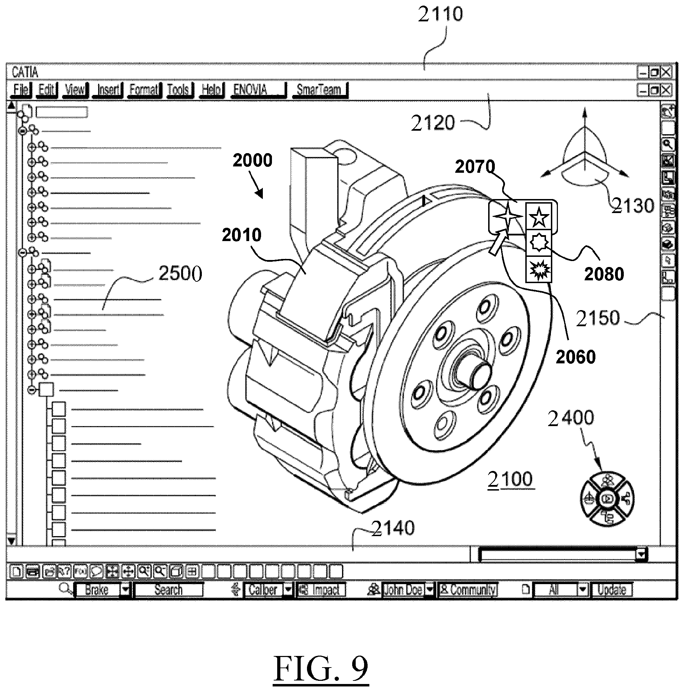

FIG. 9 shows an example of the GUI of the system, wherein the system is a CAD system.

The GUI 2100 may be a typical CAD-like interface, having standard menu bars 2110, 2120, as well as bottom and side toolbars 2140, 2150. Such menu- and toolbars contain a set of user-selectable icons, each icon being associated with one or more operations or functions, as known in the art. Some of these icons are associated with software tools, adapted for editing and/or working on the 3D modeled object 2000 displayed in the GUI 2100. The software tools may be grouped into workbenches. Each workbench comprises a subset of software tools. In particular, one of the workbenches is an edition workbench, suitable for editing geometrical features of a modeled object 2000. In operation, a designer may for example pre-select a part of the object 2000 and then initiate an operation (e.g. change the dimension, color, etc.) or edit geometrical constraints by selecting an appropriate icon. For example, typical CAD operations are the modeling of the punching or the folding of the 3D modeled object displayed on the screen. The GUI may for example display data 2500 related to the displayed object 2000. In the example of the figure, the data 2500, displayed as a "feature tree", and their 3D representation 2000 pertain to a brake assembly including brake caliper and disc. The GUI may further show various types of graphic tools 2130, 2070, 2080 for example for facilitating 3D orientation of the object, for triggering a simulation of an operation of an edited object or render various attributes of the displayed object 2000. A cursor 2060 may be controlled by a haptic device to allow the user to interact with the graphic tools.

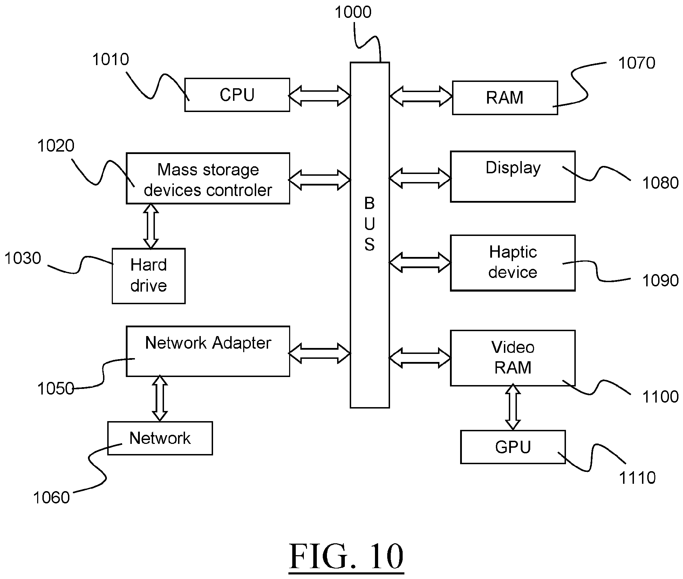

FIG. 10 shows an example of the system, wherein the system is a client computer system, e.g. a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

## Claims

1. A computer-implemented method for generating a 3D model representing a factory, the method comprising:

   - obtaining a point cloud from a scan of the factory; and
   - fitting the point cloud with linear CAD extrusions.

2. The method of claim 1, wherein the method further comprises fitting the point cloud with revolution CAD extrusions, each CAD extrusion fitting a respective segment of the point cloud, and the fitting comprising, for said respective segment:

- selecting a type for the CAD extrusion among a linear type and a revolution type; and
- fitting the respective segment with a CAD extrusion of the selected type.

3. The method of claim 2, wherein the selection of the type comprises:

- applying a neural network configured to take as input the segment and to output a type for the CAD extrusion among a linear type and a revolution type; or
- determining a set of candidate extrusion axes from the segment, and, for each candidate extrusion axis of the set of candidate extrusion axes, performing one or more identifications of a type for the CAD extrusion among a linear type and a revolution type.

4. The method of claim 3, wherein the determining of the set of candidate extrusion axes is based on a principal component analysis of the segment.

5. The method of claim 3 or 4, wherein the performing of the one or more identifications comprises performing one or more of:

- a first identification comprising:

o determining horizontal slice volumes along the candidate extrusion axis, each horizontal slice volume being delimited by two respective planes perpendicular to the candidate extrusion axis;
o for each horizontal slice volume, extracting the points of the segment included in the horizontal slice volume, thereby forming a subset of points; and
o for each subset:

▪ projecting the points of the subset on a plane orthogonal to the candidate extrusion axis;
▪ determining a contour of the projected points; and
▪ quantifying a similarity of the determined contour with a circle;

o determining the revolution type when an average of the quantified similarities is higher than a threshold; and

- a second identification comprising:

o determining vertical slice volumes along the candidate extrusion axis, each vertical slice volume being delimited by two respective planes radial to the candidate extrusion axis;
o for each vertical slice volume, extracting the points of the segment included in the vertical slice volume, the extracted points forming a subset of points; and
o for each subset, projecting the points of the subset on a middle plane radial to the candidate extrusion axis, the middle plane being substantially centered between the two respective planes delimiting the vertical slice volume of the subset;
o for each pair of the subsets, computing a distance between the projected points of each subset of the pair; and
o determining the revolution type when an average of the computed distances is lower than a threshold.

6. The method of any one of claims 3 to 5, wherein the selection of the type further comprises determining a type for the CAD extrusion based on a combination of the results of the performed identifications.

7. The method of any one of claims 3 to 6, the method further comprising, after the selection of the type, determining a profile for the CAD extrusion of the selected type.

8. The method of claim 7, wherein the determining of the profile comprises:

- selecting an extrusion axis for the CAD extrusion of the selected type among the set of candidate extrusion axes;
- projecting the points of the segment on a projection plane, the projection plane being:

    o a plane perpendicular to the extrusion axis when the selected type is the linear type, or
    o a plane radial to the extrusion axis when the selected type is the revolution type; and

- determining a contour of the projected points.

**9.** The method of claim 8, wherein the determined contour comprises a subset of the projected points, the determining of the profile further comprising simplifying the determined contour based on a reduction of the number of projected points that the subset of the determined contour comprises.

**10.** The method of any one of claims 1 or 9, wherein:

- the selection of the type and/or the determining of the profile is/are performed iteratively, each new iteration comprising:

    o sampling a new set of candidate extrusion axes in a cone around a previous extrusion axis, the previous extrusion axis being among the set of candidate extrusion axes considered in the previous iteration; and
    o repeating the selection of the type and/or the determining of the profile with the new set of candidate extrusion, and/or

- wherein the selecting of the extrusion axis comprises applying a neural network configured to takes as input the segment and to output the extrusion axis, the neural network being trained according to the selected type.

**11.** The method of any one of claims 1 to 10, the method further comprising, after the fitting of the point cloud with the linear CAD extrusions and/or the revolution CAD extrusions:

- computing a connectivity graph based on the linear CAD extrusions and the revolution CAD extrusions, the connectivity graph comprising nodes representing the linear CAD extrusions and the revolution CAD extrusions and edges each between a pair of the nodes, each edge representing an intersection between the CAD extrusions pairs that the nodes of the pair represent; and
- connecting one or more of the linear CAD extrusions and the revolution CAD extrusions based on the connectivity graph.

**12.** The method of any one of claims 1 to 11, the method further comprising using the generated 3D model to rearrange the factory.

**13.** A computer program comprising instructions for performing the method of any of claims 1-12.

**14.** A computer readable storage medium having recorded thereon a computer program of claim 13.

**15.** A system comprising a processor coupled to a memory and a graphical user interface, the memory having recorded thereon the computer program of claim 1.

FIG. 1

FIG. 2

EP 4 332 817 A1

201

Here, $N_{hslices} = 4$

$t_h$

a)            b)            c)            d)

<u>FIG. 3</u>

EP 4 332 817 A1

Here, $N_{vslices} = 3$

301

$t_v$

a)          b)          c)          d)

FIG. 4

EP 4 332 817 A1

S120

Applied for each candidate axis

Test 1

Are all profiles similar?

Test 2

Are all profiles close to circles?

Candidate axes

Pair of values ($m_{vertical}$, $m_{horizontal}$) for each candidate axis

Determine best axis (minimize $m_{vertical}$ and/or $m_{horizontal}$)

S130

Sample new candidate axes

S110

## FIG. 5

S301      S302      S303      S304

Computation of the shape axes (PCA or deep learning)

Projection the points along the selected axis

Extraction of the contour with alphashape

Final CAD primitive

FIG. 6

S401      S402      S403      S404

Computation of the shape axes (PCA or deep learning)

Projection the points along the selected axis

Extraction of the contour with alphashape

Final CAD primitive

## FIG. 7

**FIG. 8**

FIG. 9

1000

1010    CPU ⟷ ⟷

1070    RAM

1020    Mass storage devices controler ⟷

1080    Display

1030    Hard drive

1090    Haptic device

1050    Network Adapter ⟷

1100    Video RAM

1060    Network

1110    GPU

BUS

FIG. 10

Europäisches
Patentamt

European
Patent Office

Office européen
des brevets

**EUROPEAN SEARCH REPORT**

Application Number

EP 22 30 6301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | 3d Systems:  "User Guide Geomagic Design X ¦ November 2013", , 1 November 2013 (2013-11-01), pages 1-968, XP055671228, Retrieved from the Internet: URL:https://www.engineering.pitt.edu/uploadedFiles/_Content/Sub_Sites/Business/MRW/SCPI/_Library/specs/geomagicdesignx2014userguide.pdf [retrieved on 2020-02-24] * Reverse Modeling Process; page 47 – page 48 * * Reverse modeling strategy – creating the best 3D model from the 3D scan data (point cloud or mesh); page 64 – page 65 * * Extrude (solids); page 299 – page 304 * * Revolve (solids); page 304 – page 308 * * parametric feature modeling; page 65 – page 65 * * parametric feature modeling; page 68 – page 70 * * types of 3D scan data; page 54 – page 63 * * Section 3.2.2 Understanding Mesh: "A 3D scanning application generally uses a mesh which is created from a scanned point cloud"; page 58 – page 58 * * Modeling from point cloud; page 8 – page 8 * * Scan to CAD; page 20 – page 20 * * page 1 – page 83 * ----- -/-- | 1-15 | INV. G06F30/13 G06F30/27 G06F30/17 ADD. G06F111/20 |

TECHNICAL FIELDS SEARCHED (IPC)

G06F

The present search report has been drawn up for all claims

| Place of search | Date of completion of the search | Examiner |
|---|---|---|
| Munich | 24 January 2023 | Brandiska, Pavlina |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 3

**EP 4 332 817 A1**

# EUROPEAN SEARCH REPORT

Europäisches Patentamt
European Patent Office
Office européen des brevets

**Application Number**

EP 22 30 6301

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hawk Ridge Systems: "Geomagic Design X: Intro to Reverse Engineering", , 30 November 2020 (2020-11-30), XP093014631, Retrieved from the Internet: URL:https://www.youtube.com/watch?v=N5OAEZ2SE3U [retrieved on 2023-01-17] * Linear extrusion: 3:44 to 4:56 Revolution extrusion: 4:56 to 5:21 Point cloud (implicit), 3D CAD model: 0:00 to 10:39, i.e. whole video Profile, extrusion axes: 3:44 to 5:21 * ----- | 1-15 | |
| X | MIKAELA ANGELINA UY ET AL: "Point2Cyl: Reverse Engineering 3D Objects from Point Clouds to Extrusion Cylinders", ARXIV.ORG, CORNELL UNIVERSITY LIBRARY, 201 OLIN LIBRARY CORNELL UNIVERSITY ITHACA, NY 14853, 17 December 2021 (2021-12-17), XP091119276, * abstract * * page 1 - page 19; figures 1,5 * ----- | 1-15 | **TECHNICAL FIELDS SEARCHED (IPC)** |
| X | SHELLSHEAR EVAN ET AL: "Maximizing Smart Factory Systems by Incrementally Updating Point Clouds", IEEE COMPUTER GRAPHICS AND APPLICATIONS, IEEE SERVICE CENTER, NEW YORK, NY, US, vol. 35, no. 2, 1 March 2015 (2015-03-01), pages 62-69, XP011576391, ISSN: 0272-1716, DOI: 10.1109/MCG.2015.38 [retrieved on 2015-03-20] * page 62 - page 69 * ----- -/-- | 1-15 | |

The present search report has been drawn up for all claims

| Place of search | Date of completion of the search | Examiner |
|---|---|---|
| Munich | 24 January 2023 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 30 6301

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FRANCESCO BUONAMICI ET AL: "Reverse engineering modeling methods and tools: a survey", COMPUTER-AIDED DESIGN AND APPLICATIONS, vol. 15, no. 3, 16 November 2017 (2017-11-16), pages 443-464, XP055574952, DOI: 10.1080/16864360.2017.1397894 * abstract * * page 443 - page 464; figure 1; tables 1,2 * | 1-15 | |

TECHNICAL FIELDS
SEARCHED (IPC)

The present search report has been drawn up for all claims

| Place of search | Date of completion of the search | Examiner |
|---|---|---|
| Munich | 24 January 2023 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LANDRIEU, L. ; SIMONOVSKY, M.** *Large-scale Point Cloud Semantic Segmentation with Superpoint Graphs,* 2017, https://doi.org/10.48550/ARX-IV.1711.09869

- **LIN, C. ; LIU, L. ; LI, C. ; KOBBELT, L. ; WANG, B. ; XIN, S. ; WANG, W.** *SEG-MAT: 3D Shape Segmentation Using Medial Axis Transform,* 2020, https://doi.org/10.48550/ARXIV.2010.11488